Europäisches Patentamt

European Patent Office

Office européen des brevets

(11) Veröffentlichungsnummer: **0 132 507**
**A2**

# (12) EUROPÄISCHE PATENTANMELDUNG

(21) Anmeldenummer: **84104213.8**

(22) Anmeldetag: **13.04.84**

(51) Int. Cl.⁴: **C 09 D 1/02**
**C 04 B 28/26**

(30) Priorität: **21.04.83 DE 3314475**

(43) Veröffentlichungstag der Anmeldung:
**13.02.85 Patentblatt 85/7**

(84) Benannte Vertragsstaaten:
**AT BE CH DE FR GB IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Pesch, Wolfgang**
**Noithausener Strasse 10**
**D-4048 Grevenbroich(DE)**

(72) Erfinder: **Beer, Günter**
**Dr. Kolb-Strasse 9**
**D-41000 Duisburg 17(DE)**

(54) **Bindemittel auf der Basis von Alkalimetallsilikatlösungen.**

(57) Die Erfindung betrifft Bindemittel auf der Basis von wäßrigen Alkalimetallsilikatlösungen - d. h. Wasserglaslösungen -, enthaltend die folgenden Komponenten:

a) wäßrige Alkalimetallsilikatlösungen mit einem Molverhältnis $SiO_2/Me_2O$ von 3 bis 5 : 1, wobei Me Natrium, Kalium und/oder Lithium bedeutet, und einem $SiO_2$-Gehalt im Bereich von 12 bis 30 Gew.-%, bezogen auf die Gesamtzusammensetzung,

b) 0,1 bis 1,5 gew.-%, bezogen auf die Gesamtzusammensetzung, vernetzte und/oder unvernetzte Copolymere von Maleinsäureanhydrid und Ethylen oder Methylvinylether, deren Anhydridgruppen hydrolysiert und neutralisiert sind, bzw. deren Gemische.

EP 0 132 507 A2

P a t e n t a n m e l d u n g

D 6789   EP

"Bindemittel auf der Basis von Alkalimetallsilikatlösungen"

Gegenstand der Erfindung sind Bindemittel auf der Basis
von wäßrigen Alkalimetallsilikatlösungen - d. h. Wasserglaslösungen - mit einem Gehalt an organischen Polymeren. Derartige Bindemittel können beispielsweise für
Wasserglasgrundierungen, -farben, -putze, -beschich-
tungen, -kitte und -kleber Verwendung finden.

Farben, Putze, Kleber und Beschichtungen auf Basis von
Wasserglaslösungen erweisen sich nach dem Trocknen als
relativ spröde und oftmals als nicht hinreichend wasserfest. Weitere Nachteile bzw. Probleme derartiger Formulierungen auf Wasserglasbasis sind darin zu sehen, daß
einerseits Füllstoffe und Pigmente sich nicht in allen
Fällen in reinen Wasserglaslösungen zufriedenstellend
dispergieren lassen und daß andererseits die rheologischen Eigenschaften solcher Formulierungen für eine
Reihe von Anwendungszwecken nicht in der erwünschten,
optimalen Weise eingestellt werden können.

Der vorliegenden Erfindung liegt daher die Aufgabe zugrunde, Bindemittel auf der Basis von wäßrigen Alkalimetallsilikatlösungen durch einen Zusatz von organischen
Polymeren so zu modifizieren, daß bei einer hinreichend
guten Temperatur- bzw. Feuerfestigkeit auch alle anderen
anwendungstechnischen Eigenschaften derartiger Formulierungen in gleicher Weise verbessert werden. Dies betrifft insbesondere die Verbesserung der rheologischen

/2

Eigenschaften, des Dispergierverhaltens, der Haftung, der Verkieselung und der Wasserfestigkeit sowie eine Verminderung der Sprödigkeit der getrockneten Filme.

Bislang hat es nicht an Versuchen gefehlt, die vorstehend angesprochenen Eigenschaften von Wasserglas-Bindemitteln zu optimieren. In der Praxis hat sich jedoch gezeigt, daß Maßnahmen, die einzelne der aufgezählten Eigenschaften positiv beeinflussen, bei anderen zum Teil gerade eine entgegengesetzte Wirkung entfalten. So läßt sich beispielsweise durch eine Erhöhung des Molverhältnisses $SiO_2/Me_2O$ (Me = Alkalimetall) der Wasserglaslösung die Wasserfestigkeit der getrockneten Filme erhöhen; gleichzeitig bedingt diese Maßnahme jedoch auch eine Erhöhung der Sprödigkeit der Filme bzw. der Überzüge.

In der deutschen Offenlegungsschrift 27 29 194 werden Kleber und/oder Beschichtungsmassen für Mineralfasern auf der Basis von Alkalisilikatlösungen beschrieben, die einen Gehalt an einem mineralogisch mehr als 20 % Kaolinit enthaltenden Material sowie einem wasserlöslichen und alkalibeständigen organischen Polymeren aufweisen. Als organisches Polymeres kommt insbesondere polymeres Methacrylat in Frage. Derartige Kleber sollen sich durch eine gute Lagerungsstabilität auszeichnen sowie ferner dadurch, daß die erhaltenen Klebestellen bzw. Beschichtungen nicht verspröden und eine hohe Wasserfestigkeit aufweisen.

Gegenstand der deutschen Offenlegungsschrift 15 19 250 ist ein Verfahren zur Herstellung von stabilen und in Wasser dispergierbaren silikatischen Pulvermischungen unter Verwendung von Alkalisilikat und Füllstoffen. Hierbei wird ein Alkalisilikat mit einem organischen

/3

Polymeren, wie Alkalipolyacrylat und/oder Polygalactomannit, sowie mit einem reaktiven oder inerten Füllstoff
vermischt und getrocknet. Die erhaltenen Pulver lassen
sich in Wasser dispergieren und in dieser Form als Silikatfarbe bzw. -anstrichmittel verwenden. Auch diese Dispersionen sollen eine gute Lagerbeständigkeit aufweisen
und Überzüge von hoher Abriebfestigkeit, Haftfestigkeit
und Wasserbeständigkeit erbringen.

Im Hinblick auf die beschriebene Aufgabenstellung der
vorliegenden Erfindung hat sich jedoch gezeigt, daß mit
Hilfe von Polyacrylaten bzw. Polymethacrylaten - aus der
großen Vielzahl der unterschiedlichen marktüblichen Produkte - zwar einzelne der anwendungstechnischen Eigenschaften der hier angesprochenen Wasserglasbindemittel
verbessert werden können - beispielsweise das Dispergierverhalten oder die rheologischen Eigenschaften - ,
daß jedoch gleichzeitig immer Nachteile bei einigen
anderen dieser Eigenschaften resultieren.

So läßt sich beispielsweise das Dispergierverhalten von
Wasserglaslösungen durch einen Zusatz von Polyacrylaten
bzw. -methacrylaten mit einem hohen Gehalt an Carboxylgruppen verbessern. Als nachteilig erweist sich hierbei
jedoch, daß sich derartige feste, langkettige Harze in
saurer Form nur äußerst schlecht bzw. überhaupt nicht in
Wasserglaslösungen einarbeiten lassen.

Demgegenüber können die thixotropen Eigenschaften von
Wasserglasfarben, -putzen, -beschichtungen oder -klebern
durch einen Zusatz von langkettigen und vernetzten Harzen,
zen, die einen hohen Acrylestergehalt aufweisen, verbessert werden. Derartige Harze werden üblicherweise in
Form wäßriger Dispersionen gefertigt und vertrieben.

**0132507**

Solche Dispersionen lassen sich auch in saurer Form - nach Verdünnen mit Wasser - homogen in Wasserglaslösungen einrühren. Doch bewirken die zur Herstellung solcher Dispersionen verwendeten Netzmittel - selbst in kleinen Mengen - einerseits eine Verminderung der Wasserfestigkeit und andererseits ein Schäumen der Wasserglaslösungen, welches zur Bildung von Kratern in den hiermit gewonnenen Farben und Beschichtungen führt.

Generell wurde festgestellt, daß durch einen Zusatz von Acrylat- bzw. Methacrylatpolymeren die Sprödigkeit der Wasserglasprodukte nicht ausreichend vermindert wird und daß darüber hinaus einzelne Harze sogar die Neigung zur Rißbildung der hiermit gefertigten Überzüge noch erhöhen.

In der US-Patentschrift 3 345 302 wird ferner eine Formulierung auf Basis löslicher Silikate beschrieben, die aus einer festen sauren Komponente und einem festen wasserlöslichen Silikat besteht. Die einzelnen Teilchen der sauren Komponente sind mit einem filmbildenden Copolymeren aus Maleinsäureanhydrid und Alkylvinylethern oder Olefinen, welches zu 50 bis 75 % mit einem Alkohol verestert ist, umhüllt. Beim Auflösen dieser Formulierung in Wasser löst sich auch das Copolymere und gibt die saure Komponente frei, die ihrerseits das nun gleichfalls gelöste Silikat neutralisiert und als Kieselgel ausfällt. Die festen Formulierungen weisen eine hohe Lagerbeständigkeit auf und finden - nach dem Auflösen in Wasser - als Bindemittel für feuerfeste Materialien Verwendung.

Klare, alkalische wäßrige Lösungen auf der Basis von Wasserglas - wie sie erfindungsgemäß angestrebt werden - lassen sich jedoch auf diese Weise nicht gewinnen, da

/5

sich die in der US-Patentchrift beschriebenen Teilester der Copolymeren als zu hydrophob erweisen. Dies bedeutet, daß derartige Teilester in Wasserglaslösungen nicht eingearbeitet werden können, sondern vielmehr stets auf der Lösung aufschwimmen.

Demgegenüber liegt der vorliegenden Erfindung die Aufgabe zugrunde, klare, alkalische Bindemittel auf der Basis wäßriger Alkalimetallsilikatlösungen zu entwickeln, die sich nicht in verschiedene Phasen auftrennen und sich darüber hinaus durch eine Verbesserung der anwendungstechnischen Eigenschaften - hinsichtlich der rheologischen Eigenschaften, des Dispergierverhaltens, der Haftung und Verkieselung sowie der Wasserfestigkeit und der Sprödigkeit der getrockneten Filme - auszeichnen.

Überraschenderweise wurde nun gefunden, daß die vorstehende Aufgabe durch einen Zusatz von Copolymeren aus Maleinsäureannydrid und Ethylen oder Methylvinylether, deren Anhydridgruppen hydrolysiert und neutralisiert sind, zu wäßrigen Alkalimetallsilikatlösungen gelöst wird.

Gegenstand der Erfindung sind somit Bindemittel auf der Basis von wäßrigen Alkalimetallsilikatlösungen mit einem Gehalt an organischen Polymeren, welche dadurch gekennzeichnet sind, daß sie folgende Komponenten enthalten:

a) wäßrige Alkalimetallsilikatlösungen mit einem Molverhältnis $SiO_2/Me_2O$ von 3 bis 5 : 1, wobei Me Natrium, Kalium und/oder Lithium bedeutet, und einem $SiO_2$-Gehalt im Bereich von 12 bis 30 Gew.-%, bezogen auf die Gesamtzusammensetzung

b) 0,1 bis 1,5 Gew.-%, bezogen auf die Gesamtzusammensetzung, vernetzte und/oder unvernetzte Copolymere von Maleinsäureanhydrid und Ethylen oder Methylvinylether, deren Anhydridgruppen hydrolysiert und neutralisiert sind, bzw. deren Gemische.

Die erfindungsgemäßen Bindemittel stellen klare, wäßrige, alkalische Lösungen dar, die - auch bei längerer Lagerdauer - weder eine Phasentrennung noch einen Viskositätsanstieg zeigen. Ferner weisen derartige Bindemittel im Vergleich zu den Bindemitteln nach dem Stand der Technik eine deutliche Verbesserung aller vorstehend genannten anwendungstechnischen Eigenschaften auf, ohne daß mit einer Verbesserung einzelner dieser Eigenschaften gleichzeitig eine Verschlechterung anderer verbunden wäre. Von besonderem Vorteil erweist sich ferner, daß die thixotropen Eigenschaften der erfindungsgemäßen Bindemittel - je nach dem erwünschten Verwendungszweck, beispielsweise als Farbe, Putz, Beschichtung oder Kleber - durch die Auswahl der im Bindemittel enthaltenen Copolymeren hinsichtlich deren Molekulargewicht und Vernetzungsgrad gezielt eingestellt werden können.

Zur Herstellung von Bindemitteln im Sinne der Erfindung können generell jegliche Copolymere des Maleinsäureanhydrids mit Ethylen oder Methylvinylether Verwendung finden - unabhängig von deren Molekulargewicht -, wobei sowohl vernetzte als auch unvernetzte Copolymere in Frage kommen. Auch Gemische derartiger Copolymere kommen erfindungsgemäß in Betracht.

Solche Copolymere sind sowohl in Wasser als auch in alkalischen Lösungen löslich. Beim Auflösen in Wasser werden zunächst die vorliegenden Anhydridstrukturen unter Bildung der freien Carboxylgruppen hydrolysiert,

/7

die wiederum mit Alkalien neutralisiert werden können und die entsprechenden Salze zu bilden vermögen. Ein Auflösen der Copolymeren in alkalischen Lösungen führt direkt unter Neutralisation der Carboxylgruppen zu den entsprechenden Salzen.

Im Sinne der Erfindung verwendbare Copolymere sind beispielsweise die Maleinsäureanhydrid/Ethylen-Copolymere, die von der Firma Monsanto Comp., St. Louis, USA, unter der Bezeichnung EMA® vertrieben werden. Entsprechende lineare EMA-Typen (EMA 1103, EMA 21, EMA 31) sind - im Hinblick auf ihr Molekulargewicht - gekennzeichnet durch spezifische Viskositäten im Bereich von 0,28 bis zu 1,2 (gemessen in 1 %iger Lösung in Dimethylformamid). Vernetzte EMA-Typen (EMA 61, EMA 91) weisen Gel-Viskositäten im Bereich von 10 000 bis 210 000 auf (die Gel-Viskosität wird gemessen unter Verwendung eines Brookfield-Viskosimeters - Modell RVT - bei 25 °C mit einer Nr.6-Spindel bei 5 Umdrehungen/Minute an einer 1 %igen wäßrigen Lösung, eingestellt auf pH 9 mit Ammoniak.)

Ferner haben sich beispielsweise Maleinsäureanhydrid/Methylvinylether-Copolymere der Firma GAF-Corporation, New York, USA, - vertrieben unter der Bezeichnung GANTREZ® AN - als im Sinne der Erfindung geeignet erwiesen. Derartige GANTREZ AN-Typen - beispielsweise 119, 139, 149, 169, 179 - sind im Hinblick auf ihr Molekulargewicht gekennzeichnet durch spezifische Viskositäten im Bereich von 0,1 bis zu 4,5 (gemessen in 1 %iger Lösung in Methylethylketon bei 25 °C).

Prinzipiell können mit allen derartigen EMA- und

**0132507**

GANTREZ-Typen Bindemittel im Sinne der Erfindung erhalten werden. Je nach Wahl des als Zusatz zur Wasserglaslösung verwendeten Copolymeren lassen sich die Eigenschaften des erhaltenen Bindemittels gezielt einstellen.

Im Sinne der Erfindung bevorzugt sind hierbei jedoch die hochmolekularen und/oder vernetzten Copoymeren, da sich mit diesen die besten Resultate im Hinblick auf eine Optimierung aller anwendungstechnischen Eigenschaften erzielen lassen. Zu den bevorzugten Copolymeren zählen insbesondere die EMA-Typen 61 und 91 (Gel-Viskositäten 10 000 bis 22 000 mPas bzw. 160 000 bis 210 000 mPas) sowie die Gantrez-Type AN 179 (spezifische Viskosität 3,6 bis 4,5).

Die erfindungsgemäßen Bindemittel enthalten 0,1 bis 1,5 Gew.-%, vorzugsweise 0,2 bis 0,5 Gew.-%, bezogen auf die Gesamtzusammensetzung, der vorstehend erörterten Copolymeren, deren Anhydridgruppen hydrolysiert und neutralisiert sind. Ein Gehalt derartiger Copolymere im Rahmen der genannten Bereiche - insbesondere im Rahmen des bevorzugten Bereiches - bedingt die vorteilhaften Eigenschaften der erfindungsgemäßen Bindemittel. Im Prinzip können die Bindemittel ohne Nachteil auch einen höheren Gehalt an solchen Copolymeren aufweisen, jedoch zeigen sich hier keine weiteren Vorteile mehr.

Ein weiterer wesentlicher Bestandteil der erfindungsgemäßen Bindemittel ist eine wäßrige Alkalimetallsilikatlösung, d. h. eine Wasserglaslösung. Auch sogenannte Mischgläser, d. h. Mischungen aus verschiedenen Alkalimetallsilikatlösungen kommen hierfür in Betracht. Bevorzugt enthalten die Bindemittel gemäß der Erfindung eine Natriumsilikatlösung oder eine Kaliumsilikatlösung oder eine Mischung aus Natrium- und Kaliumsilikatlösungen bzw. aus Natrium-, Kalium- und Lithiumsilikatlösungen.

/9

**0132507**

Die Verwendung der zuletzt genannten Mischgläser in den erfindungsgemäßen Bindemitteln bewirkt insbesondere eine Erhöhung der Wasserfestigkeit der mit den Bindemitteln gewonnenen Überzüge bzw. Verklebungen.

Die erfindungsgemäßen Bindemittel sind charakterisiert durch einen Gehalt an einer wäßrigen Alkalimetallsilikatlösung mit einem Molverhältnis $SiO_2/Me_2O$ von 3 bis 5 : 1, wobei Me Natrium, Kalium und/oder Lithium bedeutet, und einem $SiO_2$-Gehalt im Bereich von 12 bis 30 Gew.-%, bezogen auf die Gesamtzusammensetzung des Bindemittels.

Für die Herstellung der Bindemittel gemäß der Erfindung werden die vorstehend erörterten Copolymeren aus Maleinsäureanhydrid und Ethylen oder Methylvinylether zunächst - zweckmäßigerweise unter Erhitzen - in Wasser gelöst. Nach erfolgter Hydrolyse der Anhydridgruppen zu Carboxylgruppen lassen sich die gebildeten Lösungen problemlos unter Rühren in die wäßrigen Alkalimetallsilikatlösungen einarbeiten, wobei einerseits die freien Carboxylgruppen der Copolymeren durch die alkalischen Wasserglaslösungen neutralisiert und andererseits die ursprünglichen Molverhältnisse $SiO_2/Me_2O$ der eingesetzten Wasserglaslösungen - bedingt durch den Verbrauch an Alkali - zu höheren Werten hin verschoben werden. Es resultieren die fertigen Bindemittel-Formulierungen in Form klarer, homogener Lösungen.

Die sich auf diese Weise einstellenden erhöhten Molverhältnisse entsprechen den vorstehend genannten, die sich auf die in den erfindungsgemäßen Bindemitteln enthaltenen Alkalimetallsilikatlösungen beziehen.

0132507

Nach einem weiteren möglichen Herstellungsweg werden die Copolymeren zunächst in Wasser hydrolysiert und anschließend mit Hilfe von Alkalien neutralisiert. Als Alkalien kommen hierzu beispielsweise Alkalimetallhydroxide, wie NaOH, KOH oder LiOH, oder auch Amine und quartäre Ammoniumbasen, beispielsweise Triethanolamin bzw. Tetraethylammoniumhydroxid, in Frage. Die so gewonnenen Lösungen lassen sich dann gleichfalls ohne Schwierigkeiten in die Wasserglaslösungen einrühren, wobei ebenfalls klare, homogene Bindemittel-Lösungen resultieren.

Im Sinne der Erfindung wird jedoch der zuerst aufgezeigte Weg bevorzugt, der direkt zu den gewünschten Bindemittel-Formulierungen führt. Zudem bedingt die hiermit verbundene Bildung relativ kieselsäurereicher Alkalimetallsilikatlösungen eine Verbesserung der Wasserfestigkeit der mit dem Bindemittel gewonnenen Überzüge und Verklebungen. Die im Bindemittel enthaltenen Copolymere kompensieren in optimaler Weise eine durch das erhöhte Molverhältnis üblicherweise bedingte Versprödungsneigung dieser Filme, so daß auch dickere Schichten der erfindungsgemäßen Wasserglas-Bindemittel eine deutlich verminderte Neigung zur Rißbildung aufweisen.

Je nach Verwendungszweck können den erfindungsgemäßen Bindemitteln noch feinteilige anorganische Füllstoffe zugefügt werden, wie sie üblicherweise in derartigen Bindemitteln auf Wasserglas-Basis Verwendung finden. Hierzu kommen in der Regel alle mit Wasserglas verträglichen Füllstoffe in Frage, beispielsweise Quarzmehl, Kaoline, kristallines Calciumcarbonat, Mikroglimmer oder Magnesiumaluminiumsilikate. Ferner können den erfindungsgemäßen Bindemitteln auch alle sonst für derartige

**0132507**

Wasserglasbindemittel gebräuchlichen Additive zugesetzt werden.

In den nachfolgenden Beispielen wird die Herstellung von Bindemitteln im Sinnne der Erfindung näher erläutert. Die so gewonnenen Bindemittel-Formulierungen entsprechen hinsichtlich ihrer anwendungstechnischen Eigenschaften den Forderungen der Aufgabenstellung der Erfindung.

<u>Beispiele</u>

In den nachstehenden Beispielen sind diejenigen Komponenten angegeben, die zur Herstellung von Bindemitteln gemäß der Erfindung eingesetzt wurden. Für die Beispiele 1 bis 8 wurden die jeweils angeführten Copolymere zunächst unter Erwärmen in Wasser gelöst und anschließend mit der jeweilig angegebenen Wasserglaslösung unter Rühren vermischt. Zur Herstellung der Bindemittel gemäß den Beispielen 9 und 10 wurden die Copolymere nach dem Auflösen in Wasser zunächst mit der jeweils angegebenen Alkali-Komponente neutralisiert und erst dann mit der Wasserglaslösung unter Rühren vereinigt. In allen Beispielen wurde deionisiertes Wasser verwendet, um ein Auftreten von unerwünschten Trübungen - bedingt durch Reaktionen der Härtebildner des Wassers mit dem Wasserglas - zu vermeiden.

Bei den angegebenen Prozentzahlen handelt es sich stets um Gewichtsprozente. Die Abkürzung MSA steht für Maleinsäureanhydrid, MV für das Molverhältnis $SiO_2/Me_2O$.

<u>Beispiel 1</u>

   0,58 %  MSA/Methylvinylether-Copolymerisat, hochmolekular, spez. Viskosität = 3,6 - 4,5 (GANTREZ AN 179)

27,42 %  Wasser, deionisiert

72,00 %  Kaliwasserglas, MV = 4 : 1, $SiO_2$-Gehalt = 21 %

**0132507**

Beispiel 2

| 0,22 % | MSA/Ethylen-Copolymerisat, hochmolekular und vernetzt, Gelviskosität = 10 000 - 22 000 mPas (EMA 61) |
| 17,28 % | Wasser, deionisiert |
| 82,50 % | Kaliwasserglas, MV = 4 : 1, $SiO_2$-Gehalt = 21 % |

Beispiel 3

| 0,44 % | MSA/Ethylen-Copolymerisat, mittelmolekular, spez. Viskosität = 0,9 - 1,2 (EMA 31) |
| 9,56 % | Wasser, deionisiert |
| 90,00 % | Kaliwasserglas, MV = 4 : 1, $SiO_2$-Gehalt = 21 % |

Beispiel 4

| 0,2 % | MSA/Ethylen-Copolymerisat, Gemisch aus niedrigmolekular und hochmolekular vernetzten Typen, spez. Viskosität = 0,5 - 0,7 bzw. Gelviskosität = 160 000 - 210 000 mPas (EMA 21/EMA 91, Gew.-Verh. 1 : 3) |
| 29,8 % | Wasser, deionisiert |
| 70,0 % | Kaliwasserglas, MV = 4,3 : 1, $SiO_2$-Gehalt = 20,6 % |

Beispiel 5

| 1,2 % | MSA/Methylvinylether-Copolymerisat, hochmolekular, spez. Viskosität = 3,6 - 4,5 (GANTREZ AN 179) |
| 18,8 % | Wasser, deionisiert |
| 80,0 % | Kaliwasserglas, MV = 3,49 : 1, $SiO_2$-Gehalt = 23,8 % |

Beispiel 6

0,1 %   MSA/Ethylen-Copolymerisat, hochmolekular und
        vernetzt,
        Gelviskosität = 160 000 - 210 000 mPas (EMA 91)
9,9 %   Wasser, deionisiert
90,0 %  Natronwasserglas, MV = 3,9 : 1,
        $SiO_2$-Gehalt = 22,1 %

Beispiel 7

0,2 %   MSA/Methylvinylether-Copolymerisat, niedrig-
        molekular, spez. Viskosität = 0,1 - 0,5
        (GANTREZ AN 119)
9,8 %   Wasser, deionisiert
90,0 %  Natronwasserglas, MV = 3,45 : 1,
        $SiO_2$-Gehalt = 29,4 %

Beispiel 8

0,1 %   MSA/Ethylen-Copolymerisat, niedrigmolekular,
        spez. Viskosität = 0,5 - 0,7 (EMA 21)
19,9 %  Wasser,deionisiert
80,0 %  Natron-/Kali-Mischwasserglas, MV = 3 : 1,
        $SiO_2$-Gehalt = 25,3 %

Beispiel 9

0,45 %  MSA/Ethylen-Copolymerisat, hochmolekular und
        vernetzt, Gelviskosität = 10 000 - 22 000 mPas
        (EMA 61)
1,82 %  Triethanolamin
31,06 % Wasser, deionisiert
66,67 % Kaliwasserglas, MV = 4 : 1,
        $SiO_2$-Gehalt = 21 %

Beispiel 10

0,30 % MSA/Ethylen-Copolymerisat, hochmolekular und
vernetzt, Gelviskosität 160 000 - 210 000 mPas
(EMA 91)

0,19 % Lithiumhydroxidhydrat (LiOH . H$_2$O)

29,51 % Wasser, deionisiert

70,00 % Natronwasserglas, MV = 3,9 : 1,
SiO$_2$-Gehalt = 22,1 %

**0132507**

Patentansprüche

1. Bindemittel auf der Basis von wäßrigen Alkalimetallsilikatlösungen mit einem Gehalt an organischen Polymeren, dadurch gekennzeichnet, daß sie folgende Komponenten enthalten:

a) wäßrige Alkalimetallsilikatlösungen mit einem Molverhältnis $SiO_2/Me_2O$ von 3 bis 5 : 1, wobei Me Natrium,
Kalium und/oder Lithium bedeutet, und einem $SiO_2$-
Gehalt im Bereich von 12 bis 30 Gew.-%, bezogen auf
die Gesamtzusammensetzung,

b) 0,1 bis 1,5 Gew.-%, bezogen auf die Gesamtzusammensetzung, vernetzte und/oder unvernetzte Copolymere
von Maleinsäureanhydrid und Ethylen oder Methylvinylether, deren Anhydridgruppen hydrolysiert und neutralisiert sind, beziehungsweise deren Gemische.

2. Bindemittel nach Anspruch 1, dadurch gekennzeichnet,
daß sie 0,2 bis 0,5 Gew.-%, bezogen auf die Gesamtzusammensetzung, an Copolymeren enthalten.

3. Bindemittel nach Anspruch 1, dadurch gekennzeichnet,
daß sie als Alkalimetallsilikatlösung eine Natriumsilikatlösung oder eine Kaliumsilikatlösung oder eine
Mischung aus Natrium- und Kaliumsilikatlösungen bzw. aus
Natrium-, Kalium- und Lithiumsilikatlösungen enthalten.